# EUROPEAN PATENT SPECIFICATION

(11) **EP 3 230 515 B1**
(45) Date of publication and mention of the grant of the patent: **31.07.2019**
(21) Application number: 15804615.1
(22) Date of filing: 25.11.2015
(51) Int. Cl.: D06F 37/22, F16F 15/36, D06F 37/24

(54) **BALANCING RING FOR USE IN WASHING MACHINE AND WASHING MACHINE**
AUSWUCHTRING ZUR VERWENDUNG IN EINER WASCHMASCHINE UND WASCHMASCHINE
ANNEAU D'ÉQUILIBRAGE DESTINÉ À ÊTRE UTILISÉ DANS UN MACHINE À LAVER ET MACHINE À LAVER

(30) Priority: 08.12.2014 CN 201410742320
(43) Date of publication of application: 18.10.2017
(73) Proprietor: BSH Hausgeräte GmbH, 81739 München (DE)
(72) Inventor: CUI, Xuli, Nanjing Jiangsu 211000 (CN); ZHANG, Weiwang, Nanjing Jiangsu 211100 (CN); FAN, Zongwen, Nanjing City Jiangsu 211500 (CN); ZHOU, Yan, CN 210000 Nanjing (CN)
(86) International application number: PCT/IB2015/059111
(87) International publication number: WO 2016/092401

(56) References cited:
- EP-A2- 1 862 577
- US-A- 6 065 368
- US-B1- 6 418 815
- US-B1- 6 493 311

## Description

The present invention relates to a washing machine and a balancing mechanism of the washing machine.

A washing machine is generally provided with a barrel that rotates under the drive of a motor. Clothes are washed and dewatered in the barrel. To enable the barrel to tend to a balanced state in a rotating process so as to reduce vibrations and noises generated by uneven rotation of the barrel, a balancing ring is mounted on the barrel along a circumferential direction. The balancing ring includes a circular passage and several balls disposed in the passage and capable of rolling along the passage. In a dewatering process in which the barrel rotates at a high speed, the balls automatically adjust distribution positions according to an uneven distributed state of clothes in the barrel, so as to enable the barrel to reach or tend to a balanced state on the whole.

A balancing ring for balancing a rotating member comprising such a balancing ring is disclosed in US 6 418 815 B1. The balancing ring comprises a plurality of balls formed of different materials whereby one material is nonmagnetic and the other material is magnetic.

A washing machine comprising a ball balancing ring is disclosed in EP 1 862 577 A2.

However, when the barrel reaches or is at a certain rotation speed (for example, between 30 to 80 rounds), the balls in the circular passage are apt to collide with each other, thereby producing noises.

One objective of the present invention is to improve a washing machine, to reduce collision between balls in a circular passage during rotation of a barrel.

With respect to the above objective, a technical solution used in the present invention is: A washing machine, including a barrel that can rotate under the drive of a motor, a circular passage being provided on the barrel along a circumferential direction, and a plurality of balls rolling along the passage being disposed in the passage, where the plurality of balls includes magnetic balls and non-magnetic balls that can be attracted by magnetic force. The circular passage is fixed on an edge of the barrel, or at least a part of the circular passage is formed on a barrel wall.

Due to the existence of an attractive effect of magnetic balls, a plurality of balls is attracted to form a mass body. No collision occurs inside the mass body, or a small amount of balls at ends collide with each other only at the time when the rotation of the barrel is not stable. Therefore, noises produced by collision of the balls are effectively reduced. Meanwhile, each ball in the mass body rolls smoothly, so the mass body moves smoothly on the whole. Besides, the structure involved in the invention is simple and the improvement cost is low.

The barrel of the washing machine may be horizontal, oblique, or vertical. Reduction in collision noises is particularly obvious for a barrel that is horizontally or obliquely disposed.

The present invention is implemented in such a way that the balls include at least two groups, and each group includes at least one magnetic ball and several non-magnetic balls that are connected thereto under attraction of the magnetic ball. By using at least two groups of balls, balance can be formed among the respective groups of balls when eccentricity of clothes in the barrel is relatively small, so that small vibration of the barrel can still be achieved.

An isolation ball made of non-metal material is provided between each two of the at least two groups. The isolation ball prevents the two groups of balls from directly colliding with each other. The collision noises of the isolation ball made of the non-metal material are small.

As one of optional implementation manners, the isolation ball is made of an elastic material. The elastic material can better absorb vibrations and noises produced by collision.

As one of optional implementation manners, the non-magnetic balls are arranged at two ends of each group, and at each of the two ends the respective number of the non-magnetic balls is a maximum value that can be attracted by magnetic force of an adjacent magnetic ball. In this manner, adjacent two groups may not be attracted by each other, or the magnetic force is not great enough to connect two adjacent groups. The two groups are more independent and it is easier to achieve balance.

As one of optional implementation manners, a total mass of balls in each group of the at least two groups is identical. In this manner, even if clothes in the barrel are evenly distributed and the eccentricity is small, balance can be formed among the respective groups of balls, so as to achieve small vibration of the barrel.

As one of optional implementation manners, the respective numbers of magnetic balls and non-magnetic balls in each of the at least two groups are identical.

As one of optional implementation manners, the non-magnetic balls are all attracted by the magnetic balls. It can also be understood as that the balls are grouped into at least two groups when the balls are in a stable state, and there is not a scattered non-magnetic ball. In this manner, collision between non-magnetic balls is reduced and the effect of reducing noises achieved is relatively ideal.

According to the invention, the non-magnetic ball includes a metal substance. That is, the non-magnetic ball is made of metal material that can be attracted by magnetic force, or at least a part of the material is metal material that can be attracted by magnetic force.

As one of optional implementation manners, the balls are arranged in one single row in the passage.

As one of optional implementation manners, a viscous fluid is contained in the passage. The viscous fluid has a function of buffering collision, thereby decreasing or eliminating collision between balls.

As one of optional implementation manners, the passage is made of a material that cannot be attracted by magnetic force, or an interior of the passage is provided with a magnetic isolation layer for preventing the magnetic balls from being attached to the passage. Therefore, the magnetic balls are prevented from being attached to the passage wall.

As one of optional implementation manners, a magnetic isolation layer for preventing the magnetic balls from being attached to the barrel wall is provided between the balls and the barrel wall. The magnetic isolation layer is made of a material that cannot be attracted by magnetic force. The magnetic isolation layer may be a part of the passage wall, or may also be an individual member independent from the passage wall. The magnetic isolation layer decreases attraction force between the magnetic balls and the barrel wall.

As one of optional implementation manners, a diameter of the magnetic ball is smaller than a diameter of the non-magnetic ball. Because a barrel is generally made of metal material, a gap can be formed between the magnetic ball and the passage wall by using the magnetic ball with the smaller diameter, such that magnetic force between the magnetic balls and the barrel can be reduced, thereby benefiting motion of the balls.

As one of optional implementation manners, the circular passage is mounted close to at least one of two axial end portions of the barrel.

Another objective of the present invention is to improve a balancing ring of a washing machine, to reduce collision between balls in a circular passage during operation of the washing machine.

With respect to the above objective, a technical solution used in the present invention is: a balancing ring for use in a washing machine, including a circular passage, a plurality of balls capable of rolling along the passage being provided in the passage, where the balls include magnetic balls and non-magnetic balls that can be attracted by magnetic force.

Due to the existence of an attractive effect of magnetic balls, a plurality of balls is attracted to form a mass body. No collision occurs inside the mass body, or a small amount of balls at ends collide with each other only at the time when the rotation of the barrel is not stable. Therefore, noises produced by collision of the balls are effectively reduced. Meanwhile, each ball in the mass body rolls smoothly, so the mass body moves smoothly on the whole. Besides, the structure involved in the invention is simple and the improvement cost is low.

The balls include at least two groups, and each group includes at least one magnetic ball and several non-magnetic balls that are connected thereto under attraction of the magnetic ball.

An isolation ball made of non-metal material is provided between each two of the at least two groups.

As one of optional implementation manners, the isolation ball is made of an elastic material.

As one of optional implementation manners, the non-magnetic balls are arranged at two ends of each group, and the number of the non-magnetic balls at each of the two ends is a maximum value that can be attracted by magnetic force of an adjacent magnetic ball.

As one of optional implementation manners, a total mass of balls in each group of the at least two groups is identical.

As one of optional implementation manners, the number of magnetic balls and non-magnetic balls in each of the at least two groups are identical, respectively.

As one of optional implementation manners, the non-magnetic balls are all attracted by the magnetic balls.

As one of optional implementation manners, the balls are arranged in one single row in the passage.

As one of optional implementation manners, a viscous fluid is contained in the passage.

As one of optional implementation manners, a diameter of the magnetic ball is smaller than a diameter of the non-magnetic ball.

As one of optional implementation manners, the passage is made of a material that cannot be attracted by magnetic force, or an interior of the passage is provided with a magnetic isolation layer for preventing the magnetic balls from being attached to the passage.

The present invention will be further described below with reference to the figures of the accompanying drawing.
FIG. 1 is a schematic diagram of a washing machine provided with a balancing ring;
FIG. 2 is a schematic diagram of a whole balancing ring;
FIG. 3 is a partial sectional diagram of a balancing ring and an inner barrel; and
FIG. 4 is a partial schematic diagram of balls and a passage.

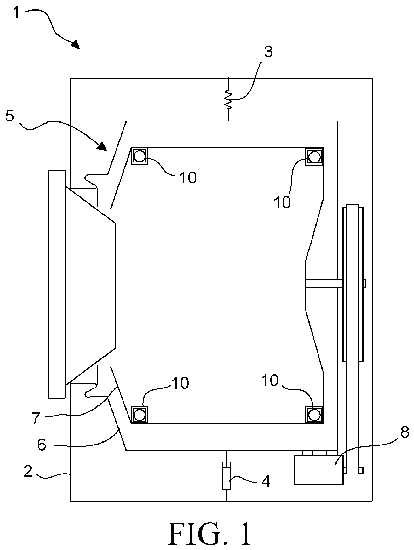

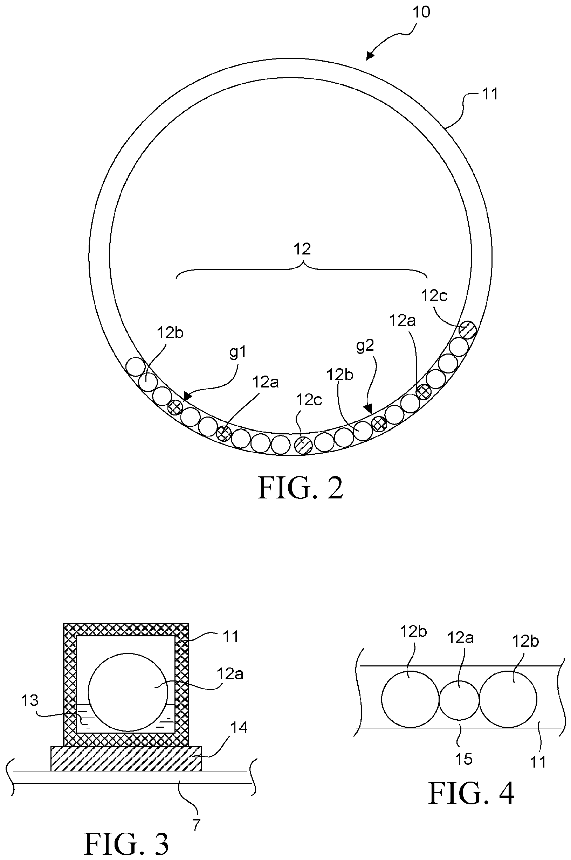

As shown in FIG. 1 and FIG. 2, a washing machine 1 includes a housing 2 and a rotary drum system 5 suspended in the housing 2 by means of an elastic suspension unit 3 and a damping support unit 4. The rotary drum system 5 comprises an outer barrel 6 connected to the elastic suspension unit 3 and the damping support unit 4, an inner barrel 7 approximately axially mounted in the outer barrel 6, and a motor 8 for driving the inner barrel 7 to rotate.

A balancing ring 10 is provided on the inner barrel 7 at a position close to each of axial end portions along a circumferential direction of a wall of the inner barrel 7. The balancing ring 10 includes a circular passage 11 and lubricating oil 13 (FIG. 3) and some balls 12 capable of rolling along the passage mounted inside the passage 11. The balls 12 are arranged in one single row in the passage 11, and a diameter of the ball 12 is slightly smaller than an inner diameter of the passage 11.

The balls 12 in the circular passage 11 include magnetic balls 12a and non-magnetic balls 12b that can be attracted by magnetic force. The non-magnetic balls 12b are made of metal material that can be attracted by magnetic force, or at least a part of the material is metal material that can be attracted by magnetic force. The non-magnetic balls 12b in this implementation manner specifically may be implemented as steel balls or iron balls having no magnetic force.

To prevent the magnetic balls 12a from being attached to the passage 11, the passage is made of a material that cannot be attracted by magnetic force. In other implementation manners, an interior of the passage 11 is provided with a magnetic isolation layer for preventing magnetic balls from being attached to the passage 11.

As shown in FIG. 3, to prevent the magnetic balls 12a from being attached to the metal inner barrel 7, a magnetic isolation layer 14 is provided between the passage 11 and the inner barrel wall 7. The magnetic isolation layer 14 is made of a material that cannot be attracted by magnetic force. That is, the magnetic isolation layer 14 cannot be attracted by magnetic force.

In other alternative implementation manners, the magnetic isolation layer 14 may also be provided in the passage 11.

Under the function of magnetic attraction force of the magnetic balls 12a, the non-magnetic balls 12b and the magnetic balls 12a are magnetically connected to form a mass body capable of moving integrally in the passage 1. As shown in the embodiment shown in FIG. 2, all of the non-magnetic balls 12b are all attracted by the magnetic balls 12a. The balls 12 are grouped into two groups, namely, a first group g1 and a second group g2. Each group separately includes two magnetic balls 12a and several non-magnetic balls 12b that are connected thereto under attraction of the magnetic balls 12a. The non-magnetic balls 12b are arranged at two ends of each group, and the number of the non-magnetic balls 12b at each of the two ends is a maximum value that can be attracted by magnetic force of an adjacent magnetic ball 12a. For example, as shown in the embodiment shown in FIG. 2, if the magnetic balls 12a each can attract three non-magnetic balls 12b, there are three non-magnetic balls 12b at each of two ends of each group. If the number of non-magnetic balls 12b at two ends of each group is less than three, the two groups are connected into one, that is, there will not be two groups formed; and if the number is greater than three, there will be a scattered non-magnetic ball 12b that is not attracted, and this or these scattered non-magnetic ball(s) 12b do not belong to any group.

Besides, a total mass of the balls 12 in the first group g1 is equal to that of the second group g2. In specific implementation, the number of magnetic balls 12a and non-magnetic balls 12b in each group are identical, respectively.

More favorably, as shown in FIG. 4, a diameter of the magnetic ball 12a is smaller than a diameter of the non-magnetic ball 12b. Under the function of a stronger magnetic force, a bottom portion of the magnetic ball 12a leaves an inner wall of the passage 11, to form a gap 15 with the inner wall of the passage 11, thereby reducing attraction force between the magnetic ball 12a and the inner barrel 7.

To reduce noises caused by collision between balls 12 of the first group g1 and the second group g2, an isolation ball 12c made of rubber is provided between the two groups. The isolation ball 12c can effectively absorb vibrations and noises caused by collision between the balls of the two groups.

In other implementation manners, the isolation ball 12c may also be made of other non-metal material.

In addition to the above implementation manners, in other implementation manners, there may also be a small amount of scattered non-magnetic balls 12b outside the groups of balls connected by magnetic force. This scattered state may possibly be a temporary state before the balancing ring 10 becomes stable.

In other implementation manners, the balls 12 may only include one group of balls connected by magnetic force and several scattered non-magnetic balls 12b. The balls 12 may also include three or more groups of balls.

All of the specific implementation manners described above and shown in the accompanying drawings are used only to describe the present invention, but are not all of the present invention. The alterations in any forms made by persons of ordinary skill in the technical field related to present invention within the scope of the basic technical concept of the present invention shall fall within the protection scope of the present invention.

## Claims

1. A balancing ring (10) for use in a washing machine (1), comprising a circular passage (11), a plurality of balls (12) capable of rolling along the passage (11) being provided in the passage (11), whereby the balls (12) comprise magnetic balls (12a) and non-magnetic balls (12b) that can be attracted by magnetic force, wherein at least a part of the material of the non-magnetic balls (12b) is metal material that can be attracted by magnetic force, and comprise at least two groups (g1, g2), and each group comprises at least one magnetic ball (12a) and several non-magnetic balls (12b) that are connected thereto under attraction of the magnetic ball (12a), **characterized in that**, an isolation ball (12c) made of non-metal material is provided between each two of the at least two groups (g1, g2).

2. The balancing ring (10) according to claim 1, **characterized in that**, the isolation ball (12c) is made of an elastic material.

3. The balancing ring (10) according to claim 1 or 2, **characterized in that**, the non-magnetic balls (12b) are arranged at two ends of each group (g1, g2), and the number of the non-magnetic balls (12b) at each of the two ends is a maximum value that can be attracted by magnetic force of an adjacent magnetic ball (12a).

4. The balancing ring (10) according to one of the preceding claims, **characterized in that**, a total mass of balls (12) in each group of the at least two groups (g1, g2) is identical.

5. The balancing ring (10) according to claim 4, **characterized in that**, the number of magnetic balls (12a) and non-magnetic balls (12b) in each of the at least two groups (g1, g2) are identical, respectively.

6. The balancing ring (10) according to one of the preceding claims, **characterized in that**, the non-magnetic balls (12b) are all attracted by the magnetic balls (12a).

7. The balancing ring (10) according to one of the preceding claims, **characterized in that**, the balls (12) are arranged in one single row in the passage (11).

8. The balancing ring (10) according to one of the preceding claims, **characterized in that**, a viscous fluid (13) is contained in the passage (11).

9. The balancing ring (10) according to one of the preceding claims, **characterized in that**, a diameter of the magnetic ball (12a) is smaller than a diameter of the non-magnetic ball (12a).

10. The balancing ring (10) according to one of the preceding claims, **characterized in that**, the passage (11) is made of a material that cannot be attracted by magnetic force, or an interior of the passage (11) is provided with a magnetic isolation layer (14) for preventing the magnetic balls (12a) from being attached to the passage.

11. A washing machine (1), comprising a barrel (7) that can rotate under the drive of a motor (8), **characterized in that**, the washing machine (1) comprises a balancing ring (10) according to one of the preceding claims and the circular passage (11) of the balancing ring (10) being provided on the barrel (7) along a circumferential direction.

12. The washing machine (1) according to claim 11, **characterized in that**, a magnetic isolation layer (14) for preventing the magnetic balls (12a) from being attached to the barrel (7) wall is provided between the balls (12) and the barrel (7) wall.

13. The washing machine (1) according to claim 11 or 12, **characterized in that**, the circular passage (11) is mounted close to at least one of two axial end portions of the barrel (7).

## Patentansprüche

1. Auswuchtring (10) zur Verwendung in einer Waschmaschine (1), der einen umlaufenden Durchgang (11) umfasst, wobei mehrere Kugeln (12), die den Durchgang (11) entlangrollen können, in dem Durchgang (11) vorgesehen sind, wobei die Kugeln (12) magnetische Kugeln (12a) und nichtmagnetische Kugeln (12b), die durch Magnetkraft angezogen werden können, wobei zumindest ein Teil des Materials der nichtmagnetischen Kugeln (12b) Metallmaterial ist, das durch Magnetkraft angezogen werden kann, und mindestens zwei Gruppen (g1, g2) umfassen und jede Gruppe mindestens eine magnetische Kugel (12a) und mehrere nichtmagnetische Kugeln (12b) umfasst, die durch die Anziehungskraft der magnetischen Kugel (12a) damit verbunden sind, **dadurch gekennzeichnet, dass** zwischen je zweien der mindestens zwei Gruppen (g1, g2) eine Isolierkugel (12c) aus einem Nichtmetallmaterial vorgesehen ist.

2. Auswuchtring (10) nach Anspruch 1, **dadurch gekennzeichnet, dass** die Isolierkugel (12c) aus einem elastischen Material hergestellt ist.

3. Auswuchtring (10) nach Anspruch 1 oder 2, **dadurch gekennzeichnet, dass** die nichtmagnetischen Kugeln (12b) an zwei Enden jeder Gruppe (g1, g2) angeordnet sind und die Anzahl der nichtmagnetischen Kugeln (12b) an jedem der zwei Enden ein Maximalwert ist, der von der Magnetkraft einer benachbarten magnetischen Kugel (12a) angezogen werden kann.

4. Auswuchtring (10) nach einem der vorhergehenden Ansprüche, **dadurch gekennzeichnet, dass** eine Gesamtmasse der Kugeln (12) in jeder der mindestens zwei Gruppen (g1, g2) gleich ist.

5. Auswuchtring (10) nach Anspruch 4, **dadurch gekennzeichnet, dass** die Anzahl der magnetischen Kugeln (12a) beziehungsweise der nichtmagnetischen Kugeln (12b) in jeder der mindestens zwei Gruppen (g1, g2) gleich ist.

6. Auswuchtring (10) nach einem der vorhergehenden Ansprüche, **dadurch gekennzeichnet, dass** die nichtmagnetischen Kugeln (12b) alle von den magnetischen Kugeln (12a) angezogen werden.

7. Auswuchtring (10) nach einem der vorhergehenden Ansprüche, **dadurch gekennzeichnet, dass** die Kugeln (12) in einer einzelnen Reihe in dem Durchgang (11) angeordnet sind.

8. Auswuchtring (10) nach einem der vorhergehenden Ansprüche, **dadurch gekennzeichnet, dass** ein viskoses Fluid (13) in dem Durchgang (11) enthalten ist.

9. Auswuchtring (10) nach einem der vorhergehenden Ansprüche, **dadurch gekennzeichnet, dass** ein Durchmesser der magnetischen Kugel (12a) geringer ist als ein Durchmesser der nichtmagnetischen Kugel (12a).

10. Auswuchtring (10) nach einem der vorhergehenden Ansprüche, **dadurch gekennzeichnet, dass** der Durchgang (11) aus einem Material hergestellt ist, das von Magnetkraft nicht angezogen werden kann, oder eine Innenseite des Durchgangs (11) mit einer magnetisch isolierenden Schicht (14) versehen ist, die verhindert, dass die magnetischen Kugeln (12a) an dem Durchgang haften bleiben.

11. Waschmaschine (1), die eine Trommel (7) umfasst, welche sich bei Antrieb durch einen Motor (8) drehen kann, **dadurch gekennzeichnet, dass** die Waschmaschine (1) einen Auswuchtring (10) nach einem der vorhergehenden Ansprüche umfasst und der umlaufende Durchgang (11) des Auswuchtrings (10) in einer Umfangsrichtung an der Trommel (7) entlang vorgesehen ist.

12. Waschmaschine (1) nach Anspruch 11, **dadurch gekennzeichnet, dass** eine magnetisch isolierende Schicht (14), die verhindert, dass die magnetischen Kugeln (12a) an der Wand der Trommel (7) haften bleiben, zwischen den Kugeln (12) und der Wand der Trommel (7) vorgesehen ist.

13. Waschmaschine (1) nach Anspruch 11 oder 12, **dadurch gekennzeichnet, dass** der umlaufende Durchgang (11) in der Nähe mindestens eines von zwei axialen Endabschnitten der Trommel (7) angebracht ist.

## Revendications

1. Bague d'équilibrage (10) à utiliser dans une machine à laver (1), comprenant un passage circulaire (11), une pluralité de billes (12) en mesure de rouler le long du passage (11) étant ménagées dans le passage (11), dans lequel les billes (12) comprennent des billes magnétiques (12a) et des billes non-magnétiques (12b) qui peuvent être attirées par une force magnétique, dans laquelle au moins une partie du matériau des billes non-magnétiques (12b) est un matériau métallique qui peut être attiré par une force magnétique, et comprennent au moins deux groupes (g1, g2), et chaque groupe comprend au moins une bille magnétique (12a) et plusieurs billes non-magnétiques (12b) qui y sont raccordées, sous l'attraction de la bille magnétique (12a), **caractérisée en ce qu'**une bille d'isolation (12c) constituée de matériau non métallique est prévue entre chaque paire des au moins deux groupes (g1, g2).

2. Bague d'équilibrage (10) selon la revendication 1, **caractérisée en ce que**, la bille d'isolation (12c) est réalisée en un matériau élastique.

3. Bague d'équilibrage (10) selon la revendication 1 ou 2, **caractérisée en ce que**, les billes non-magnétiques (12b) sont agencées aux deux extrémités de chaque groupe (g1, g2), et le nombre de billes non-magnétiques (12b) à chacune des deux extrémités est une valeur maximale qui peut être attirée par une force magnétique d'une bille magnétique adjacente (12a).

4. Bague d'équilibrage (10) selon l'une des revendications précédentes, **caractérisée en ce que**, une masse totale de billes (12) dans chaque groupe des au moins deux groupes (g1, g2) est identique.

5. Bague d'équilibrage (10) selon la revendication 4, **caractérisée en ce que**, le nombre de billes magnétiques (12a) et le nombre de billes non-magnétiques (12b) dans chacun des au moins deux groupes (g1, g2) sont identiques, respectivement.

6. Bague d'équilibrage (10) selon l'une quelconque des revendications précédentes, **caractérisée en ce que**, les billes non magnétiques (12b) sont toutes attirées par les billes magnétiques (12a).

7. Bague d'équilibrage (10) selon l'une des revendications précédentes, **caractérisée en ce que**, les billes (12) sont agencées sur une seule rangée dans le passage (11).

8. Bague d'équilibrage (10) selon l'une des revendications précédentes, **caractérisée en ce que**, un fluide visqueux (13) est contenu dans le passage (11).

9. Bague d'équilibrage (10) selon l'une des revendications précédentes, **caractérisée en ce que**, un diamètre de la bille magnétique (12a) est inférieur à un diamètre de la bille non-magnétique (12a).

10. Bague d'équilibrage (10) selon l'une des revendications précédentes, **caractérisée en ce que**, le passage (11) est réalisé en un matériau qui ne peut pas être attiré par une force magnétique, ou l'intérieur du passage (11) est doté d'une couche d'isolation magnétique (14) permettant d'empêcher que les billes magnétiques (12a) ne s'attachent au passage.

11. Machine à laver (1), comprenant un tambour (7) qui peut tourner sous l'entraînement d'un moteur (8), **caractérisée en ce que**, la machine à laver (1) comprend une bague d'équilibrage (10) selon l'une des revendications précédentes et le passage circulaire (11) de la bague d'équilibrage (10) étant ménagé sur le tambour (7) le long d'une direction circonférentielle.

12. Machine à laver (1) selon la revendication 11, **caractérisée en ce que**, une couche d'isolation magnétique (14) permettant d'empêcher que les billes magnétiques (12a) ne s'attachent à la paroi du tambour (7) est ménagée entre les billes (12) et la paroi du tambour (7).

13. Machine à laver (1) selon la revendication 11 ou 12, **caractérisée en ce que**, le passage circulaire (11) est monté près d'au moins une des deux parties axiales du tambour (7).
